# EUROPEAN PATENT SPECIFICATION

(11) **EP 2 285 140 B1**
(45) Date of publication and mention of the grant of the patent: **30.03.2016**
(21) Application number: 09768758.6
(22) Date of filing: 16.06.2009
(51) Int. Cl.: H04W 76/04

(54) **DATA TRANSMISSION METHOD, NETWORK SYSTEM AND DEVICE THEREOF**
DATENÜBERTRAGUNGSVERFAHREN, NETZWERKSYSTEM UND DAZUGEHÖRIGE VORRICHTUNG
PROCÉDÉ DE TRANSMISSION DE DONNÉES, SYSTÈME DE RÉSEAU ET DISPOSITIF ASSOCIÉS

(30) Priority: 27.06.2008 CN 200810029102
(43) Date of publication of application: 16.02.2011
(60) Divisional application: 16150116.8
(73) Proprietor: Huawei Technologies Co., Ltd., Longgang District Shenzhen, Guangdong 518129 (CN)
(72) Inventor: ZHOU, Zhaojie c/o Huawei Technologies Co.Ltd., Int.Prop.Dept., Shenzhen (CN)
(74) Representative: Kreuz, Georg Maria
(86) International application number: PCT/CN2009/072304
(87) International publication number: WO 2009/155833

(56) References cited:
- US-A1- 2007 258 402
- US-A1- 2007 258 402
- ERICSSON ET AL: "Introduction of requirements for UE capable of receiving HS-DSCH and HS-SCCH in CELL_FACH state", 3GPP DRAFT; R4-072219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Jeju; 20071114, 14 November 2007 (2007-11-14), XP050178612, [retrieved on 2007-11-14]
- CATT ET AL: "Introduction of an additional UE Category for 1.28Mcps TDD E-DCH", 3GPP DRAFT; R3-080443, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080218, 18 February 2008 (2008-02-18), XP050163644, [retrieved on 2008-02-18]
- "3rd Generation Partnership Project; Technical Specification Group Radio Access Network; UTRAN I ub Interface User Plane Protocols for Common Transport Channel data streams (Release 7)", 3GPP STANDARD; 3GPP TS 25.435, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.8.0, 1 March 2008 (2008-03-01), pages 1-51, XP050368938,
- NOKIA SIEMENS NETWORKS: "Consideration on Iur problem on Enhanced FACH", 3GPP DRAFT; R2-075297 CONSIDERATION ON IUR PROBLEM ON ENHANCED FACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju; 20071112, 12 November 2007 (2007-11-12), XP050137713, [retrieved on 2007-11-12]
- HUAWEI: "Improve the data rate for Enhanced Cell_FACH state in FDD", 3GPP DRAFT; R3-081938_IMPROVE THE DATA RATE FOR ENHANCED CELL_FACH STATE IN FDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165001, [retrieved on 2008-08-13]
- HUAWEI: "Improve the data rate for Enhanced Cell_FACH state in FDD", 3GPP DRAFT; R3-082020_IMPROVE DATA RATE FOR EFACH_25435CRXXXX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165078, [retrieved on 2008-08-13]
- ZTE ET AL: 'Modifying HS-DSCH Physical Layer Category Info in Synchronised/Unsynchronised Radio Link Reconfiguration procedure' 3GPP DRAFT; R3-061305 TSG-RAN3 MEETING 53 no. N; 20060904, 04 September 2006, TALLIN, XP050160209

## Description

### FIELD OF THE TECHNOLOGY

The present invention relates to the field of mobile communication, and more particularly to a data transmission method, a network system, and a corresponding device.

### BACKGROUND OF THE INVENTION

In the 3^{rd} generation (3G) radio network, user equipment (UE) has two states, that is, an idle mode and a connected mode. The connected mode is further classified into four states, namely, cell dedicated channel (CELL_DCR), cell forward access channel (CELL_FACH), cell paging channel (CELL_PCH), and universal mobile telecommunications system terrestrial radio access network registration area paging channel (URA_PCR). The basic characteristic of the CELL_FACH state is that, no dedicated physical channel connection is provided between the UE and the radio access network, and the UE continuously monitors an FACH transmission channel in a downlink direction and uses a common or shared transmission channel, e.g. random access channel (RACH), in an uplink direction, so that the UE is enabled to initiate an access process on an associated transmission channel at any time.

The enhanced CELL_FACH is a new technique introduced based on the CELL_FACH technique in the 3^{rd} Generation Partnership Project (3GPP) R7.

In the enhanced CELL_FACH, the downlink data borne on an FACH transmission channel may be handed over to a high speed downlink shared channel (HS-DSCH), so as to increase the data transmission rate in the CELL_FACH state and reduce the state transition delay.

As seen from the technical features of the R7 standardized enhanced CELL_FACH, in the enhanced CELL_FACH state, downlink user data is allowed to be transmitted to the UE through the HS-DSCH, which shares the downlink resources with the UE in the CELL_DCH state, so that the UE in the CELL_FACH state may also enjoy downlink high speed data transmission just like the UE in the CELL_DCH state.

In the non-enhanced CELL_FACH state, the data transmission rate is generally lower than 32 Kbps, and the downlink high speed data transmission cannot be realized until the state of the UE is transited to the CELL_DCH state. In contrast, in the enhanced CELL_FACH state, the downlink high speed data transmission can be realized without transiting the state of the UE to the CELL_DCH state, so that the time required by the state transition from the original CELL_FACH state to the CELL_DCH state for realizing the high speed data transmission is greatly reduced, and the data transmission rate is increased.

However, in the current enhanced CELL_FACH state, a radio transceiver in the network, e.g. a radio base station (Node B) or an Evolution Node B (E-Node B), does not know the capability category of the UE that implements enhanced CELL_FACH reception in the current cell, so that the radio transceiver can only perform transport format resource combination (TFRC) on enhanced CELL_FACH data queues using a scheduling algorithm based on the lowest capability category of the UE, thereby resulting in limitations of the data transmission rate.

In the US patent application US2007/258402A1, user equipment for communicating data in a communications system is disclosed. And the user equipment comprises: a transceiver arranged to receive at least one data packet over a communications channel, wherein the data packet comprises an identifier; and a processor arranged to determine from the identifier if the said user equipment is one of the a subset of user equipment, wherein the processor is arranged to determine if the first identifier is one of the subset of user equipment when the identifier matches a first value if the communications channel is a common channel or a second value if the communications channel is a dedicated channel.

In the document Ericsson ET AL: "Introduction of requirements for UE capable of receiving HS-DSCH and HS-SCCH in CELL_FACH state", 3GPP DRAFT; R4-072219,3RD GENERATION PATNERSHIP PROJECT (3GPP), MOBILE COMPETENCE CENTRE; 650,ROUTE DES LUCIOLES; F-06921 SOPHIA-ANTIPOLIS CEDEX; FRANCE, vol.RAN WG4, no.Jeju; 20071114,14 November 2007, XP050178612, [retrieved on 2007-11-14], fixed reference channel for minimum performance requirements for different HS-DSCH categories is introduced, and the details can be found in chapter 9.2.

In the document CATT ET AL: "introduction of an additional UE Category for 1.28 Mcps TDD E-DCH",3GPP DRAFT; R3-080443,3RD GENERATION PATNERSHIP PROJECT (3GPP), MOBILE COMPETENCE CENTRE; 650,ROUTE DES LUCIOLES; F-06921 SOPHIA-ANTIPOLIS CEDEX; FRANCE, vol.RAN WG3, no.Sorrento, Italy; 20080218,18 February 2008, XP050163644, [retrieved on 2008-02-18], the extended E-DCH Physical Layer Category LCR IE and the definition of id-Extended-E-DCH-LCRTDD-PhysicalLayerCategory LCR are described.

In the document "3rd Generation Partnership Project; Technical Specification Group Radio Access Network; UTRAN Iub Interface User Plane Protocols for Common Transport Channel data streams (Release 7)", 3GPP STANDARD; 3GPP TS 25.435,3RD GENERATION PATNERSHIP PROJECT (3GPP), V7.8.0, 1 March 2008, pages 1-51, xP050368938, a description of the UTRAN RNC-NodeB (Iub) interface user plane protocols for common Transport Channel data streams as agreed within the TSG-RAN working group 3 is provided.

In the document NOKIA SIEMENS NETWORKS: "Consideration on Iur problem on Enhanced FACH", 3GPP DRAFT; R2-075297 CONSIDERATION ON IUR PROBLEM ON ENHANCED FACH, 3RD GENERATION PATNERSHIP PROJECT (3GPP), 12 November 2007,XP050137713, [retrieved on 2007-11-12], the Iur problems and the solution based on the two approaches, RRC Connection Release and Maintaining are described.

### SUMMARY OF THE INVENTION

Accordingly, the present invention is directed to a data transmission method, a network system, and a corresponding device in an enhanced CELL_FACH state, which are applicable to enable a radio transceiver to perform data transmission based on the capability category of a target UE when enhanced CELL_FACH data is received.

To solve the above technical problem, according to its first aspect, the present invention provides a data transmission method in an enhanced CELL_FACH state, which includes the following steps.

A Node B receives information related to indicating a capability category of a UE from a radio network controller, wherein the information related to indicating the capability category of the UE is contained in a high speed downlink shared channel, HS-DSCH, data frame TYPE2 data frame.

The Node B acquires the capability category of the UE according to theHS-DSCH data frame TYPE2 data frame.

The Node B performs data transmission according to the capability category of the UE.

According to its second aspect, the present invention provides a Node B, which includes a receiving unit, an acquisition unit, and a transmission processing unit.

The receiving unit is configured to receive information related to indicating the capability category of a UE from a radio network controller, wherein the information related to indicating the capability category of the UE is contained in a high speed downlink shared channel, HS-DSCH, data frame TYPE2 data frame.

The acquisition unit is configured to acquire the capability category of the UE according to the information related to indicating the capability category of the UE received by the receiving unit.

The transmission processing unit is configured to perform data transmission in an enhanced CELL_FACH state according to the capability category of the UE.

According to its third aspect, the present invention provides a radio network controller, which includes a sending unit.

The sending unit is configured to send information related to indicating a capability category of a user equipment ,UE,to a Node B to instruct the Node B to perform data transmission in an enhanced cell forward access channel state according to the capability category of the UE, wherein the information related to indicating the capability category of the UE is contained in a high speed downlink shared channel, HS-DSCH, data frame TYPE2 data frame.

According to its fourth aspect, the present invention provides a network system, which includes the Node B and the radio network controller.

According to its fifth aspect, the present invention provides a method for use with the radio network controller.

According to the present invention, the radio transceiver receives the information related to indicating the capability category of the UE, and acquires the capability category of the UE. Therefore, during the enhanced CELL_FACH data transmission, the radio transceiver performs data transmission based on the capability category of the target UE, instead of the lowest capability category of the UE, and thus the data transmission rate in the enhanced CELL_FACH state is increased.

### BRIEF DESCRIPTION OF THE DRAWINGS

FIG 1 is a flow chart of a data transmission method in an enhanced CELL_FACH state according to an embodiment of the present invention;
FIG. 2 is a schematic view of an HS-DSCH DATA FRAME TYPE2 data frame according to an embodiment of the present invention;
FIG 3 is a schematic structural view of a network system according to an embodiment of the present invention;
FIG 4 is a schematic structural view of a sending unit in a control apparatus according to an embodiment of the present invention; and
FIG 5 is a schematic structural view of a radio transceiver according to an embodiment of the present invention.

### DETAILED DESCRIPTION OF THE EMBODIMENTS

Currently, the enhanced CELL_FACH technique defined by the 3GPP R7 standard protocol is normally implemented in the following process:
1. A UE supporting enhanced CELL_FACH firstly monitors HS-DSCH common system information IE carried in a System Information Block type 5 and 5bis message broadcasted in a cell, and configures basic parameters required by the enhanced CELL_FACH, in which a Common H-RNTI and an BCCH specific H-RNTI must be included.
   Here, the IE is the abbreviation for information element, the RNTI is the abbreviation for radio network temporary identifier, the H-RNTI is the abbreviation for HS-DSCH-RNTI, and the BCCH is the abbreviation for broadcast control channel.
2. The UE carries a support of high speed physical downlink shared channel (HS-PDSCH) in CELL_FACH IE and a support of MAC-ehs IE in an RRC CONNECTION REQUEST message, so as to inform a radio network controller (RNC) that the UE supports the enhanced CELL_FACH (E-FACH).
   Here, the RRC is the abbreviation for radio resource control, and the MAC is the abbreviation for medium access control.
3. If the RNC knows that the cell where the UE currently resides also supports the E-FACH, the RNC may indicate that the UE is in the CELL_FACH state and configure other related parameters of HS-DSCH reception in an RRC Connection Setup message, wherein the related parameters include a dedicated H-RNTI.
4. The UE returns an RRC Connection Setup Complete message, and the message may carry an HS-DSCH physical layer category of the UE. At this time, the UE is in a state of monitoring a high speed physical downlink shared control channel (HS-SCCH) physical channel.
5. When a message signaling or data needs to be transmitted via the BCCH, common control channel (CCCH), dedicated control channel (DCCH), and dedicated traffic channel (DTCH), the RNC transmits the signaling or data to a Node B through an HS-DSCH data frame (for example, HS-DSCH DATA FRAME TYPE2) of an Iub interface (that is, an interface between the RNC and the Node B), and meanwhile carries a corresponding H-RNTI in the data frame.
6. When scheduling the data according to a queue priority, the Node B performs different TFRC selection processing according to the H-RNTI category carried in the HS-DSCH data frame (briefly referred to as an FP frame hereinafter), and there may be the following two circumstances:
   A. When the Node B schedules the data according to a queue priority, if the H-RNTI carried in the FP frame is an BCCH specific H-RNTI, the data is BCCH message signaling, and accordingly, the Node B performs signaling data transmission according to HS-SCCH power, HS-PDSCH power and a fixed number of channelization codes configured at an upper layer, and ignores an RACH Measurement Result IE, and meanwhile the H-RNTI for HS-SCCH encryption is the BCCH specific H-RNTI.
   B. When the Node B schedules the data according to the queue priority, if the H-RNTI carried in the FP frame is not an BCCH specific H-RNTI, the data is CCCH, DCCH, and DTCH signaling or data, and accordingly, the Node B performs TFRC selection according to an HS-DSCH physical layer category-Category 12 and an RACH Measurement Result IE (generally, an Ec/N0 of CPICH) in the FP frame containing the data based , and performs HS-SCCH encryption using the H-RNTI in the FP frame.

   Here, the CPICH is the abbreviation for common pilot channel, and the Ec/N0 refers to chip-level signal-to-noise ratio.
7. If the UE has already been allocated with the dedicated H-RNTI, the UE monitors the HS-SCCH channel using both the dedicated H-RNTI and the BCCH specific H-RNTI, and if the reception is correct, the UE starts receiving HS-PDSCH data according to information carried in the HS-SCCH.
8. If the UE is not allocated with the dedicated H-RNTI, the UE monitors the HS-SCCH using both the Common H-RNTI and the BCCH specific H-RNTI, and if the reception is correct, the UE starts receiving HS-PDSCH data according to information carried in the HS-SCCH.

As seen from the above description, in the circumstance of 6B, since the Node B does not know the capability category of the UE that implements E-FACH reception in the current cell, the Node B can only perform TFRC selection based on the lowest capability category of the UE (for example, the lowest HS-DSCH physical layer category-Category 12).

It should be noted that, taking a Universal Mobile Telecommunication System (UMTS) for example, the UE capability category includes HS-DSCH physical layer category or enhanced dedicated channel (E-DCH) physical layer category, and is corresponding to a series of parameters of Packet Data Convergence Protocol (PDCP), radio link control (RLC), MAC, and physical (PHY) layer. The HS-DSCH physical layer category defines the UE supporting HSDPA in the UMTS. This category is corresponding to a series of parameters including a supported maximum number of channelization codes, a receiving capability in the minimum continuous transmission time intervals (TTIs), and a bit number of data for the largest HS-DSCH transmission block in a single TTI, supported modulation modes, and Multiple-Input Multiple-Output (MIMO), which are adopted by the Node B for reference in the HSDPA scheduling.

In the flat architecture, an E-Node B is adopted to replace the original RNC and the Node B. A corresponding module of the E-Node B (for example, a module corresponding to the original Node B) does not know the capability category of the UE in the E-FACH state either, so that a similar problem still exists.

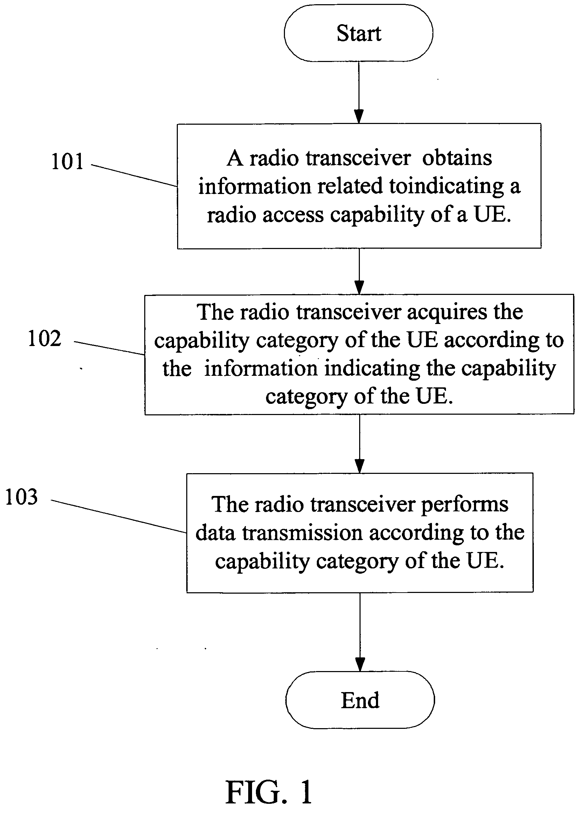

In view of the above, in an embodiment of the present invention, a data transmission method in an E-FACH state is provided, as shown in the schematic view of FIG 1. The method includes the following steps.

101, a radio transceiver receives information related to indicating capability category of a UE.

The radio transceiver may be a Node B or a corresponding module in an E-Node B in the flat architecture (that is, a functional module corresponding to the original Node B in the E-Node B).

The capability category of the UE may refer to a physical layer category of the UE, for example, HS-DSCH physical layer category or E-DCH physical layer category of the UE. The information related to indicating the capability category of the UE may be a data frame or signaling, for example, an HS-DSCH data frame indicating the capability category of the UE, or signaling containing the capability category of the UE, or signaling related to indicating the capability category of the UE, for example, a signaling that instructs the radio transceiver to store the capability category of the UE when the UE is transited from a CELL_DCH state to a CELL_FACH state.

Depending upon the different information related to indicating the capability category of the UE, the radio transceiver may acquire the capability category of the UE from explicit or implicit information. The explicit information refers to information that directly contains the capability category of the UE, for example, the HS-DSCH data frame or signaling, e.g. Node B Application Part (NBAP) signaling, containing the capability category of the UE. The implicit information refers to information that does not directly contain the capability category of the UE, but indirectly enables the radio transceiver to acquire the capability category of the UE.

When the radio transceiver is specifically a related module in the E-Node B, a RNC entity and a Node B entity are integrated into the E-Node B, but the internal mechanism of the E-Node B still works according to specific functions of the RNC and the Node B.

102, the radio transceiver acquires the capability category of the UE according to the information related to indicating the capability category of the UE.

The radio transceiver acquires the capability category of the UE in different manners depending upon the different information related to indicating the capability category of the UE.

When the information is explicit, the radio transceiver directly resolves the information, so as to acquire the capability category of the UE.

When the information is implicit, the information does not directly contain the capability category of the UE, but indirectly enables the radio transceiver to acquire the capability category of the UE. It is assumed that the radio transceiver is Node B, and, for example, when the UE is about to perform RRC connection state transition, the RNC initiates an NBAP signaling of transiting the UE from a CELL_DCH state to a CELL_FACH state. As the Node B has already stored the capability category of the UE locally when the UE is in the CELL_DCH state, the related NBAP signaling (for example, Radio Link Deletion Request signaling) sent, by the RNC, to the Node B instructs the Node B to store (not delete) the capability category of the UE. Thus, in the E-FACH state, the Node B performs data transmission according to the stored capability category of the UE, that is, the NBAP signaling implicitly indicates the capability category of the corresponding UE in the Node B. Therefore, the radio transceiver acquires the locally stored capability category of the UE.

103, the radio transceiver performs data transmission according to the capability category of the UE.

Specifically, the radio transceiver performs the TFRC selection according to the capability category of the UE, so as to implement data transmission correspondingly.

Multiple modes of information related to indicating the capability category of the UE are described in the following.

Mode 1: An HS-DSCH data frame (for example, HS-DSCH DATA FRAME TYPE2) is adopted to carry an indicator of an HS-DSCH physical layer category of a UE, for example, a mobile station (MS).

For ease of understanding, the format of the HS-DSCH DATA FRAME TYPE2 data frame is taken as an example below, which is compared with the format of the HS-DSCH DATA FRAME TYPE2 data frame defined in the prior 3GPP R7 protocol in the following illustration.

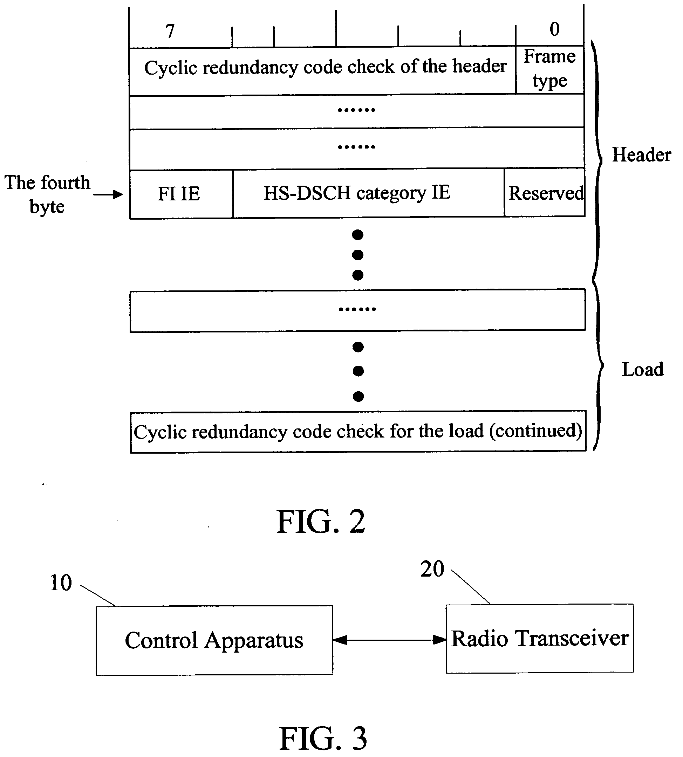

FIG. 2 shows an example of the format of the HS-DSCH DATA FRAME TYPE2 data frame according to an embodiment of the present invention. For the convenience of description, the "HS-DSCH DATA FRAME TYPE2 data frame" is represented by the "FP frame" below. The difference of the FP frame lies in the definition of a fourth byte of the FP frame, which is illustrated in the following.

The fourth byte of the FP frame in the prior R7 protocol includes two parts, namely, an FACH Indicator (FI) IE and a Spare; whereas in the embodiment of the present invention, the fourth byte of the FP frame includes three parts, namely, an FI IE, an HS-DSCH category IE, and a Spare. Meanwhile, the definitions of the FI IE and bit lengths of the two FP frames are also different, as listed in Table 1:

**Table 1**

| | **Definition** | **Bit Width (Bit)** | **Value Range** |
|---|---|---|---|
| FI IE of the FP frame in the prior R7 protocol | The FI indicates whether the UE is in the CELL_FACH state, and whether an H-RNTI and an RACH Measurement Result are provided. | 1 | 1 represents that the H-RNTI and the RACH Measurement Result are provided; and 0 represents that the two are not provided. |
| FI IE of the FP frame in the embodiment of the present invention | The FI indicates whether the UE is in the CELL_FACH state, and whether an H-RNTI, an RACH Measurement Result, and an HS-DSCH physical layer category of the UE are provided. | 2 | 11 represents that the H-RNTI, the RACH Measurement Result, and the HS-DSCH physical layer category of the UE are provided; 10 represents that the H-RNTI and the RACH Measurement Result are provided, whereas the HS-DSCH physical layer category of the UE is not provided; and 00 represents that none of the above are provided. |

In the embodiment of the present invention, a new HS-DSCH category IE is defined in the FP frame, which is configured to indicate the HS-DSCH physical layer category of a target UE of a signaling data frame. The HS-DSCH category IE altogether has 4 bits. When the FI IE is "11 ", the HS-DSCH category IE is filled with bits corresponding to the HS-DSCH physical layer category defined in the 3GPP R7 25.306 protocol, and at this time, the corresponding relation there-between is shown in Table 2; otherwise, the HS-DSCH category IE is filled with "0000", which is equal to the Spare of the byte.

**Table 2**

| **HS-DSCH category IE of the FP frame in the embodiment of the present invention** | **HS-DSCH physical layer category defined in 25.306** |
|---|---|
| 0000 | N/A |
| 0001 | Category 5 |
| 0010 | Category 6 |
| 0011 | Category 7 |
| 0100 | Category 8 |
| 0101 | Category 9 |
| 0110 | Category 10 |
| 0111 | Category 12 |
| 1000 | Category 13 |
| 1001 | Category 14 |
| 1010 | Category 15 |
| 1011 | Category 16 |
| 1100 | Category 17 |
| 1101 | Category 18 |
| 1110 | Category 19 |
| 1111 | Category 20 |

The Spare bit in the fourth byte of the FP frame defined in the embodiment of the present invention has 2 bits left, which may be filled with "00", and the 2 bits may also serve as extension spare bit positions for the HS-DSCH physical layer category of the subsequent UE.

It should be noted that, the definitions in the above two tables are only exemplary, instead of limiting the embodiment of the present invention. For example, the mapping relation between the HS-DSCH physical layer category defined in 25.306 and the HS-DSCH category IE of the FP frame in the embodiment of the present invention may not follow the specifications in Table 2, but have other modifications, which will not be described herein, and other similar modifications are easily derived by persons of ordinary skill in the art.

Therefore, in this embodiment, in the E-FACH state, after obtaining the HS-DSCH DATA FRAME TYPE2 data frame containing the HS-DSCH physical layer category of the UE, the Node B resolves the data frame to obtain the capability category of the UE (that is, the HS-DSCH physical layer category), performs data scheduling according to an E-FACH data transmission mode as defined in the 3GPP R7 standard protocol, and transmits data in the corresponding channels.

Mode 2: The capability category of the UE is explicitly or implicitly contained in a signaling. Specifically, the signaling may be an NBAP signaling.
1) In the explicit case, the radio transceiver obtains an NBAP signaling containing a physical layer category of the UE, resolves the signaling to obtain a capability category of the UE, performs data scheduling according to an E-FACH data transmission mode as defined in the 3GPP R7 standard protocol, and transmits data in the corresponding channels.
2) An implicit instance generally occurs in the case of connection state transition. For example, when the UE is transited from a CELL**_**DCH state to a CELL_FACH state, the RNC sends an NBAP signaling containing a Radio Link Deletion Request to the Node B. The signaling is originally intended to delete the original radio link parameter information (that is, the radio link parameter information in the CELL_DCH state) of the UE, so as to re-configure the radio link parameter information in the CELL_FACH state on the Node B. However, in the CELL_DCH state, the radio link parameter information stored in the Node B contains the physical layer category of the UE, so in the embodiment of the present invention, when the UE is transited from the CELL_DCH state to the CELL_FACH state, the NBAP signaling sent from the RNC to the Node B instructs the Node B to store the physical layer category of the UE, so as to enable the Node B to acquire the capability category of the UE in the E-FACH state. Besides, the NBAP signaling may even include other HS-DSCH parameter configurations in the original CELL_DCH state, so as to support the UE in the CELL_FACH state to obtain a higher HS-DSCH transmission rate as much as possible. A specific example of the NBAP signaling is given below for further illustration.

Taking the Radio Link Deletion Request signaling in the NBAP signaling for example, when the UE is transited from the CELL_DCH state to the CELL_FACH state, the RNC sends the Radio Link Deletion Request signaling to the Node B, so as to delete related radio link parameters in the CELL_DCH state.

In this embodiment, in order to enable the Node B to acquire the capability category of the UE, an RRC State Transition Indicator of the UE in the current link deletion is added in the Radio Link Deletion Request signaling. The RRC State Transition Indicator is defined in Table 3 as follows:

**Table 3**

| **IE/Groupe Name** | **Presence** | **Range** | **IE Type and References** | **Semantics Description** | **Criticality** | **Assigned Criticality** |
|---|---|---|---|---|---|---|
| RRC State Transition Information | | | | | - | |
| > RRC State Transition Indicator | O | | Enumerated (CELL_FACH) | | | |
| >HS-DSCH-RNTI | O | | INTEGER (0..65535) | | | |

In Table 3, an RRC state that the UE corresponding to the radio link deleted by the RRC State Transition Indicator IE is about to enter includes an Idle state and a CELL_FACH state, and the RRC State Transition Indicator IE is extensible.

The HS-DSCH-RNTI IE instructs the RNC to assign a new H-RNTI to the UE corresponding to the deleted radio link.

After the Node B receives the RRC State Transition Information IE, if the RRC State Transition Indicator IE indicates the CELL_FACH, and the RNC assigns a new H-RNTI to the UE, the RRC State Transition Indicator IE contains an HS-DSCH-RNTI IE, so that the H-RNTI stored in the Node B is consistent with the H-RNTI stored in the UE, and the Node B stores a corresponding relation between the HS-DSCH physical layer category and the H-RNTI of the UE corresponding to the radio link. The RRC State Transition Indicator IE may even include other HS-DSCH parameter configurations in the original CELL_DCH state. These parameters may include whether to support 64 Quadrature Amplitude Modulation (64 QAM) mode and parameters in the mode, MIMO mode and parameters in the mode, CQI finally reported by the UE, and the like, so that the Node B may adopt the corresponding capability category of the UE and the above HS-DSCH parameters for making reference when performing the TFRC selection, so as to perform corresponding data transmission.

It should be noted that, the Node B may only store a part of or all of the other HS-DSCH parameters in the original CELL_DCH state, or only store the physical layer category information, or store all the information.

If the Node B stores the physical layer category information of the UE in the link deletion according to the NBAP signaling, it is equivalent to implicitly sending an indicator of the capability category of the UE, by the RNC, to the Node B through the NBAP signaling.

In the circumstance that the radio transceiver is a corresponding module in the E-Node B, the RNC entity and the Node B entity are integrated into the E-Node B, so that the data frame, NBAP signaling, and the like transmitted between the RNC and the Node B are all internal transmission signals in the E-Node B. Thus, according to specific designs of the manufacturers, the data frame or NBAP signaling may be adopted to transmit the physical layer category information of the UE between the RNC entity and the Node B entity inside the E-Node B, or a data transmission format defined in the E-Node B may be adopted to transmit the physical layer category information of the UE between the RNC entity and the Node B entity.

As described above, in the data transmission method in the E-FACH state according to the embodiment of the present invention, since the indicator of the capability category of the UE is explicitly or implicitly sent to the Node B, when the UE receives E-FACH data in the CELL_FACH state, the Node B performs TFRC selection on CCCH, DCCH, and DTCH data queues from the RNC based on the HS-DSCH physical layer category of the target UE, instead of the lowest physical layer category (for example, Category 12), thereby increasing the data transmission rate in the E-FACH state. In the technical solution of the embodiment of the flat architecture, a similar technical effect can be achieved by using the corresponding technical solution, which will not be described herein again.

Correspondingly, as shown in FIG 3, in an embodiment of the present invention, a network system is also provided, and the system may operate in an E-FACH state. The system includes a control apparatus 10 and a radio transceiver 20. Specifically, the radio transceiver 20 may be a Node B, and the control apparatus 10 may be an RNC. Alternatively, the radio transceiver 20 may be a corresponding module (for example, a transceiver module) in an E-Node B in the flat architecture, and the control apparatus 10 may be a corresponding module (for example, a control module) in the E-Node B in the flat architecture.

The control apparatus 10 includes a sending unit 100 configured to send information related to indicating a capability category of a UE to the radio transceiver 20, so as to instruct the radio transceiver to perform data transmission in an E-FACH state according to the capability category of the UE. The capability category of the UE includes an HS-DSCH or E-DCH physical layer category of the UE.

In order to send different information related to indicating the capability category of the UE, the sending unit 100 may include a first sending sub-unit 1000, or a second sending sub-unit 1002, or a third sending sub-unit 1004.

The first sending sub-unit 1000 is configured to send an HS-DSCH data frame containing the capability category of the UE to the radio transceiver.

The second sending sub-unit 1002 is configured to send a first signaling containing the capability category of the UE to the radio transceiver.

The third sending sub-unit 1004 is configured to send a second signaling related to indicating the capability category of the UE to the radio transceiver. The signaling includes an indicator of notifying the radio transceiver of storing the capability category of the UE when the UE is transited from a CELL_DCH state to a CELL_FACH state.

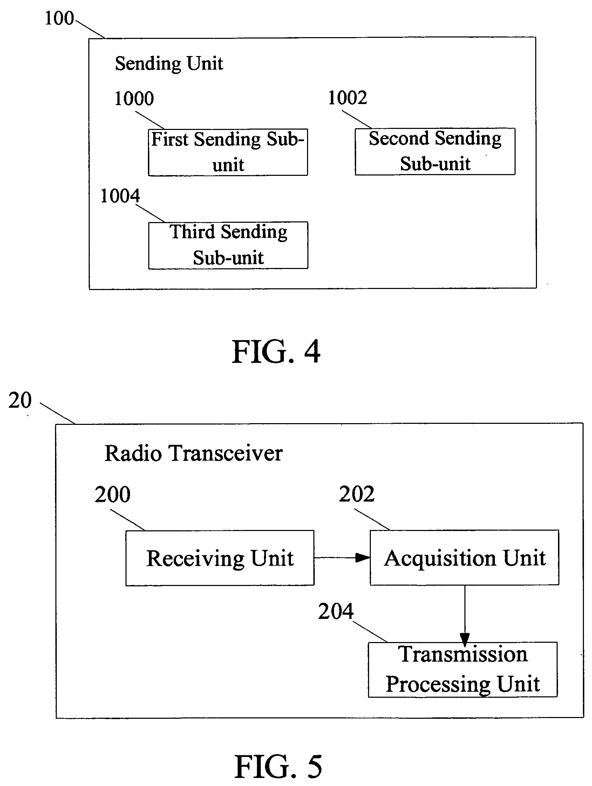

The sending unit 100 may include any one or more of the above three sub-units, and FIG 4 shows a circumstance that the three sub-units all exist.

The format of the HS-DSCH data frame may take the format of the FP frame in the embodiment of the present invention as shown in FIG 2 as an example. That is, the fourth byte of the FP frame contains both the FI IE and the HS-DSCH category IE to together indicate the capability category of the UE.

The FI IE indicates whether the UE is in the CELL_FACH state, and whether the H-RNTI, RACH Measurement Result, and HS-DSCH physical layer category of the UE are provided, which can be seen in Table 1.

The HS-DSCH category IE indicates the HS-DSCH physical layer category of the target UE of the data frame, that is, the capability category of the UE. Specifically, when the FI IE indicates that the HS-DSCH physical layer category of the UE is provided, the HS-DSCH category IE may provide the specific capability category of the UE according to the HS-DSCH physical layer category defined in the 3GPP R7 25.306 protocol; and when the FI IE indicates that the HS-DSCH physical layer category of the UE is not provided, the HS-DSCH category IE is filled with 0 byte, as shown in Table 2.

The above description on the format of the HS-DSCH data frame is only exemplary, and the HS-DSCH data frame of the present invention may have other formats. For example, the capability category of the UE may be contained in other bytes of the data frame, and the indicator of the capability category of the UE may be realized in other forms, which is not necessarily 6 bytes in total, and is not described herein again.

The first signaling may be an NBAP signaling, and the specific NBAP signaling adopted to notify the radio transceiver of the capability category of the related UE is apparent to persons of ordinary skill in the art, so that the details may not be given herein again.

The second signaling may be an NBAP signaling, which may be specifically an NBAP signaling containing a Radio Link Deletion Request that is sent from the RNC to the Node B during connection state transition, for example, when the UE is transited from the CELL_DCH state to the CELL_FACH state. An RRC State Transition Indicator of the UE in the current link deletion as shown in Table 3 is added in the signaling. The RRC State Transition Indicator of the UE carries two pieces of information:
1. RRC State Transition Indicator information, which indicates an RRC state that the corresponding UE is about to enter.
2. HS-DSCH-RNTI information, which is included when the RRC State Transition Indicator information indicates that the UE is about to enter the CELL_FACH state, and the information instructs the RNC to assign a new H-RNTI to the corresponding UE.

After the Node B receives the RRC State Transition Indicator of the UE, if the RRC State Transition Indicator information indicates that the UE is about to enter the CELL_FACH state, the RRC State Transition Indicator IE further contains an HS-DSCH-RNTI IE, so that the H-RNTI stored in the Node B is consistent with the H-RNTI stored in the UE, and the Node B stores a corresponding relation between the HS-DSCH physical layer category and the H-RNTI of the UE corresponding to the radio link. The RRC State Transition Indicator IE may even include other HS-DSCH parameter configurations in the original CELL_DCH state.

As described above, when the radio transceiver 20 is a corresponding module (for example, a transceiver module) in the E-Node B, the RNC entity and the Node B entity are integrated into the E-Node B, so that the data frame, NBAP signaling, and the like transmitted between the RNC and the Node B are all internal transmission signals in the E-Node B. Thus, according to specific designs of the manufacturers, the data frame or NBAP signaling may be adopted to transmit the physical layer category information of the UE between the RNC entity and the Node B entity inside the E-Node B, or a data transmission format defined in the E-Node B may be adopted to transmit the physical layer category information of the UE between the RNC entity and the Node B entity.

Correspondingly, referring to FIG 5, the radio transceiver 20 includes a receiving unit 200, an acquisition unit 202, and a transmission processing unit 204. The receiving unit 200 is configured to receive information related to indicating capability category of a UE. The acquisition unit 202 is configured to acquire the capability category of the UE according to the information related to indicating the capability category of the UE received by the receiving unit 200. The transmission processing unit 204 is configured to perform data transmission in an E-FACH state according to an indicator of the capability category of the UE.

Corresponding to the sending unit in the control apparatus 10, the receiving unit 200 includes a first receiving sub-unit, a second receiving sub-unit, or a third receiving sub-unit.

The first receiving sub-unit is configured to receive an HS-DSCH data frame indicating the capability category of the UE, and correspondingly, the acquisition unit 202 resolves the HS-DSCH data frame to acquire the capability category of the UE.

The second receiving sub-unit is configured to receive a first signaling related to indicating the capability category of the UE, wherein the first signaling contains the capability category of the UE, and correspondingly, the acquisition unit 202 resolves the first signaling to acquire the capability category of the UE.

The third receiving sub-unit is configured to receive a second signaling related to indicating the capability category of the UE, wherein the signaling includes an indicator of notifying the radio transceiver 20 of storing the capability category of the UE when the UE is transited from a CELL_DCH state to a CELL_FACH state. Correspondingly, the acquisition unit 202 resolves the second signaling, stores the capability category of the UE in the CELL_DCH state during state transition according to the resolution result, and acquires the locally stored capability category of the UE.

In the example of the second signaling in the control apparatus10 according to the embodiment of the present invention, if the second signaling includes an RRC State Transition Indicator IE of the UE, the acquisition unit 202 resolves the IE to acquire a new H-RNTI assigned by the RNC to the UE, so that the acquisition unit 202 stores a corresponding relation between the HS-DSCH physical layer category and the H-RNTI of the UE corresponding to the radio link.

Correspondingly, the transmission processing unit may perform data transmission in the E-FACH state according to the capability category of the UE acquired by the acquisition unit.

The definitions of the HS-DSCH data frame and the NBAP signaling in the above devices are consistent with the definitions in the control apparatus 10 according to the embodiment of the present invention.

As described above, in the system according to the embodiment of the present invention, since the RNC explicitly or implicitly sends the indicator of the capability category of the UE to the Node B, when the UE receives E-FACH data in the CELL_FACH state, the Node B performs TFRC selection on CCCH, DCCH, and DTCH data queues from the RNC based on the HS-DSCH physical layer category of the target UE, instead of the Category 12, thereby increasing the data transmission rate in the E-FACH state. In the technical solution of the embodiment of the flat architecture, a similar technical effect can be achieved by using the corresponding technical solution, which will not be described herein again.

The device embodiments described above are merely exemplary. Units described as separated components may be or may not be physically separated. Components shown as units may be or may not be physical units, that is, may be integrated at a certain position or distributed to a plurality of network units. Some or all of the modules may be selected to achieve the objective of the solution of the embodiment depending upon the actual demands. Persons of ordinary skill in the art can understand and implement the present invention without making creative efforts.

Through the descriptions of the preceding embodiments, those skilled in the art may understand that the present invention may be implemented by hardware only or by software and a necessary universal hardware platform. Based on such understandings, all or part of the technical solution under the present invention that makes contributions to the prior art may be embodied in the form of a software product. The software product may be stored in a storage medium, which can be a Read-Only Memory (ROM), a Random Access Memory (RAM), a magnetic disk, or a Compact Disk Read-Only Memory (CD-ROM). The software product includes a number of instructions that enable a computer device (personal computer, server, or network device) to execute the methods provided in the embodiments of the present invention.

The above descriptions are merely some exemplary embodiments of the present invention, but not intended to limit the present invention.

## Claims

1. A data transmission method, **characterized in that** the method is applied in an enhanced cell forward access channel state and comprising:
receiving (101), by a Node B, information related to indicating capability category of a user equipment ,UE, from a radio network controller, wherein the information related to indicating the capability category of the UE is a high speed downlink shared channel, HS-DSCH, data frame TYPE2 data frame;
acquiring (102), by the Node B, the capability category of the UE according to the HS-DSCH data frame TYPE2 data frame; and
performing (103), by the Node B, data transmission according to the capability category of the UE.

2. The method according to claim 1, wherein a fourth byte of the HS-DSCH data frame TYPE2 data frame indicates the capability category of the UE.

3. The method according to any one of claims 1 to 2, wherein the capability category of the UE comprises HS-DSCH physical layer category or enhanced dedicated channel ,E-DCH, physical layer category of the UE.

4. A Node B, **characterized by** comprising:
a receiving unit (200), configured to receive information related to indicating a capability category of a user equipment ,UE, from a radio network controller, wherein the information related to indicating the capability category of the UE is a high speed downlink shared channel, HS-DSCH, data frame TYPE2 data frame;
an acquisition unit (202), configured to acquire the capability category of the UE according to the HS-DSCH data frame TYPE2 data frame received by the receiving unit; and
a transmission processing unit (204), configured to perform data transmission in an enhanced cell forward access channel state according to the capability category of the UE.

5. A data transmission method, **characterized in that** the method is applied in an enhanced cell forward access channel state and comprising:
sending, by a radio network controller, information related to indicating a capability category of the UE to a Node B to instruct the Node B to perform data transmission in an enhanced cell forward access channel state according to the capability category of the UE, wherein the information related to indicating the capability category of the UE is a high speed downlink shared channel, HS-DSCH, data frame TYPE2 data frame.

6. The method according to claim 5, wherein a fourth byte of the HS-DSCH data frame indicates the capability category of the UE.

7. A radio network controller, **characterized by** comprising:
a sending unit (100), configured to send information related to indicating a capability category of a user equipment ,UE,to a Node B to instruct the Node B to perform data transmission in an enhanced cell forward access channel state according to the capability category of the UE, wherein the information related to indicating the capability category of the UE is a high speed downlink shared channel, HS-DSCH, data frame TYPE2 data frame.

8. A network system, **characterized by** comprising the Node B (20) according to claim 4 and the radio network controller (10) according to claim 7.

## Patentansprüche

1. Datenübertragungsverfahren, **dadurch gekennzeichnet, dass** das Verfahren in einem verbesserten Zellenweiterleitungszugriffskanalzustand angewandt wird und Folgendes umfasst:
Empfangen (101) durch einen "Node" B von Informationen, die sich auf das Angeben von Fähigkeitskategorie eines Anwendergeräts, UE, beziehen, von einer Funknetzsteuereinheit, wobei die Informationen, die sich auf das Angeben der Fähigkeitskategorie des UE beziehen, ein TYP2-Datenrahmen eines gemeinsam verwendeten Hochgeschwindigkeitsabwärtsstreckenkanal-Datenrahmens, HS-DSCH-Datenrahmen-TYP2-Datenrahmens, sind;
Erfassen (102) durch den "Node" B der Fähigkeitskategorie des UE gemäß dem HS-DSCH-Datenrahmen-TYP2-Datenrahmen; und
Ausführen (103) durch den "Node" B von Datenübertragung gemäß der Fähigkeitskategorie des UE.

2. Verfahren nach Anspruch 1, wobei ein viertes Byte des HS-DSCH-Datenrahmen-TYP2-Datenrahmens die Fähigkeitskategorie des UE angibt.

3. Verfahren nach einem der Ansprüche 1 bis 2, wobei die Fähigkeitskategorie des UE HS-DSCH-Bitübertragungsschichtkategorie oder Bitübertragungsschichtkategorie des verbesserten dedizierten Kanals, E-DCH-Bitübertragungsschichtkategorie, des UE umfasst.

4. "Node" B, **dadurch gekennzeichnet, dass** er Folgendes umfasst:
eine Empfangseinheit (200), die konfiguriert ist, Informationen, die sich auf das Angeben einer Fähigkeitskategorie eines Anwendergeräts, UE, beziehen, von einer Funknetzsteuereinheit zu empfangen, wobei die Informationen, die sich auf das Angeben der Fähigkeitskategorie des UE beziehen, ein TYP2-Datenrahmen eines gemeinsam verwendeten Hochgeschwindigkeitsabwärtsstreckenkanal-Datenrahmens, HS-DSCH-Datenrahmen-TYP2-Datenrahmens, sind;
eine Erfassungseinheit (202), die konfiguriert ist, die Fähigkeitskategorie des UE gemäß dem durch die Empfangseinheit empfangenen HS-DSCH-Datenrahmen-TYP2-Datenrahmen zu erfassen; und
eine Übertragungsverarbeitungseinheit (204), die konfiguriert ist, Datenübertragung in einem verbesserten Zellenweiterleitungszugangskanalzustand gemäß der Fähigkeitskategorie des UE auszuführen.

5. Datenübertragungsverfahren, **dadurch gekennzeichnet, dass** das Verfahren in einem verbesserten Zellenweiterleitungszugriffskanalzustand angewandt wird und Folgendes umfasst:
Senden durch eine Funknetzsteuereinheit von Informationen, die sich auf das Angeben einer Fähigkeitskategorie des UE beziehen, zu einem "Node" B, um den "Node" B anzuweisen, Datenübertragung in einem verbesserten Zellenweiterleitungszugriffskanalzustand gemäß der Fähigkeitskategorie des UE auszuführen, wobei die Informationen, die sich auf das Angeben der Fähigkeitskategorie des UE beziehen, ein TYP2-Datenrahmen eines gemeinsam verwendeten Hochgeschwindigkeitsabwärtsstreckenkanal-Datenrahmens, HS-DSCH-Datenrahmen-TYP2-Datenrahmens, sind.

6. Verfahren nach Anspruch 5, wobei ein viertes Byte des HS-DSCH-Datenrahmens die Fähigkeitskategorie des UE angibt.

7. Funknetzsteuereinheit, **dadurch gekennzeichnet, dass** sie Folgendes umfasst:
eine Sendeeinheit (100), die konfiguriert ist, Informationen, die sich auf das Angeben einer Fähigkeitskategorie eines Anwendergeräts, UE, beziehen, zu einem "Node" B zu senden, um den "Node" B anzuweisen, Datenübertragung in einem verbesserten Zellenweiterleitungszugriffskanalzustand gemäß der Fähigkeitskategorie des UE auszuführen, wobei die Informationen, die sich auf das Angeben der Fähigkeitskategorie des UE beziehen, ein TYP2-Datenrahmen eines gemeinsam verwendeten Hochgeschwindigkeitsabwärtsstreckenkanal-Datenrahmens, HS-DSCH-Datenrahmen-TYP2-Datenrahmens, sind.

8. Netzsystem, **dadurch gekennzeichnet, dass** es den "Node" B (20) nach Anspruch 4 und die Funknetzsteuereinheit (10) nach Anspruch 7 umfasst.

## Revendications

1. Procédé de transmission de données, **caractérisé en ce que** le procédé est appliqué dans un état de canal d'accès en sens direct de cellule améliorée et comprenant :
la réception (101), par un Noeud B, d'informations concernant l'indication d'une catégorie de capacité d'un équipement d'utilisateur, UE (User Equipment), en provenance d'un contrôleur de réseau radio, dans lequel les informations concernant l'indication de la catégorie de capacité de l'UE sont une trame de données de TYPE2 de trame de données de canal partagé de liaison descendante à haut débit, HS-DSCH (High Speed-Downlink Shared Channel) ;
l'acquisition (102), par le Noeud B, de la catégorie de capacité de l'UE conformément à la trame de données de TYPE2 de trame de données HS-DSCH ; et
l'exécution (103), par le Noeud B, d'une transmission de données conformément à la catégorie de capacité de l'UE.

2. Procédé selon la revendication 1, dans lequel un quatrième octet de la trame de données de TYPE2 de trame de données HS-DSCH indique la catégorie de capacité de l'UE.

3. Procédé selon l'une quelconque des revendications 1 à 2, dans lequel la catégorie de capacité de l'UE comprend une catégorie de couche physique HS-DSCH ou une catégorie de couche physique de canal dédié amélioré, E-DCH (Enhanced Dedicated Channel), de l'UE.

4. Noeud B, **caractérisé en ce qu'**il comprend :
une unité de réception (200), configurée pour recevoir des informations concernant l'indication d'une catégorie de capacité d'un équipement d'utilisateur, UE, en provenance d'un contrôleur de réseau radio, dans lequel les informations concernant l'indication de la catégorie de capacité de l'UE sont une trame de données de TYPE2 de trame de données de canal partagé de liaison descendante à haut débit, HS-DSCH ;
une unité d'acquisition (202), configurée pour acquérir la catégorie de capacité de l'UE conformément à la trame de données de TYPE2 de trame de données HS-DSCH reçue par l'unité de réception ; et
une unité de traitement de transmission (204), configurée pour effectuer une transmission de données dans un état de canal d'accès en sens direct de cellule améliorée conformément à la catégorie de capacité de l'UE.

5. Procédé de transmission de données, **caractérisé en ce que** le procédé est appliqué dans un état de canal d'accès en sens direct de cellule améliorée et comprenant :
l'envoi, par un contrôleur de réseau radio, d'informations concernant l'indication d'une catégorie de capacité de l'UE à un Noeud B pour ordonner au Noeud B d'effectuer une transmission de données dans un état de canal d'accès en sens direct de cellule améliorée conformément à la catégorie de capacité de l'UE, dans lequel les informations concernant l'indication de la catégorie de capacité de l'UE sont une trame de données de TYPE2 de trame de données de canal partagé de liaison descendante à haut débit, HS-DSCH.

6. Procédé selon la revendication 5, dans lequel un quatrième octet de la trame de données HS-DSCH indique la catégorie de capacité de l'UE.

7. Contrôleur de réseau radio, **caractérisé en ce qu'**il comprend :
une unité d'envoi (100), configurée pour envoyer des informations concernant une indication d'une catégorie de capacité d'un équipement d'utilisateur, UE, à un Noeud B pour ordonner au Noeud B d'effectuer une transmission de données dans un état de canal d'accès en sens direct de cellule améliorée conformément à la catégorie de capacité de l'UE, dans lequel les informations concernant l'indication de la catégorie de capacité de l'UE sont une trame de données de TYPE2 de trame de données de canal partagé de liaison descendante à haut débit, HS-DSCH.

8. Système de réseau, **caractérisé en ce qu'**il comprend le Noeud B (20) selon la revendication 4 et le contrôleur de réseau radio (10) selon la revendication 7.
